# FASCICULE DE BREVET EUROPEEN

(11) **EP 4 010 643 B1**
(45) Date de publication et mention de la délivrance du brevet: **29.04.2026**
(21) Numéro de dépôt: 20734015.9
(22) Date de dépôt: 23.06.2020
(51) Int. Cl.: F25J 1/00, F25J 1/02, F17C 6/00, F25B 1/053, F25B 1/10, F25B 9/06, F25B 11/04, F25B 47/00, F25B 49/02, F28D 7/00, F25B 47/02

(54) **PROCÉDÉ, DISPOSITIF ET INSTALLATION DE RÉFRIGÉRATION ET/OU DE LIQUÉFACTION**
KÜHL- UND/ODER VERFLÜSSIGUNGSVERFAHREN, VORRICHTUNG UND SYSTEM
REFRIGERATION AND/OR LIQUEFACTION METHOD, DEVICE AND SYSTEM

(30) Priorité: 05.08.2019 FR 1908945
(43) Date de publication de la demande: 15.06.2022
(73) Titulaire: L'Air Liquide, société anonyme pour l'Étude et l'Exploitation des procédés Georges Claude, 75007 Paris (FR)
(72) Inventeur: DURAND, Fabien, 38360 SASSENAGE (FR); GUILLET, Damien, 38360 SASSENAGE (FR); NICOLAS, Rémi, 38360 SASSENAGE (FR); GONDRAND, Cécile, 38360 SASSENAGE (FR); BERNHARDT, Jean-Marc, 38360 SASSENAGE (FR)
(74) Mandataire: Air Liquide
(86) Numéro de dépôt international: PCT/EP2020/067417
(87) Numéro de publication internationale: WO 2021/023428

(56) Documents cités:
- US-A1- 2006 168 976
- US-A1- 2010 275 616
- US-A1- 2012 180 520

## Description

L'invention concerne un procédé, un dispositif et une installation de réfrigération et/ou de liquéfaction. L'invention concerne plus particulièrement un procédé de réfrigération et/ou de liquéfaction d'un flux de fluide utilisateur, notamment du gaz naturel, le procédé utilisant une installation de refroidissement et/ou de liquéfaction comprenant un dispositif de réfrigération à basse température, c'est-à-dire à une température comprise entre moins 100 degrés centigrade et moins 273 degrés centigrade et notamment entre moins 100 degrés centigrade et moins 253 degrés centigrade, le dispositif de réfrigération comprenant un circuit de travail formant une boucle et contenant un fluide de travail, le circuit de travail formant un cycle comprenant en série: un mécanisme de compression du fluide de travail, un mécanisme de refroidissement du fluide de travail, un mécanisme de détente du fluide de travail et un mécanisme de réchauffement du fluide de travail, le dispositif de réfrigération comprenant un échangeur de refroidissement destiné à extraire de la chaleur au flux de fluide utilisateur par échange de chaleur avec le fluide de travail circulant dans le circuit de travail, l'installation comprenant une conduite de circulation dudit flux de fluide utilisateur dans l'échangeur de refroidissement, le procédé comprenant une étape de refroidissement dans lequel le dispositif de réfrigération est dans un premier mode de fonctionnement de refroidissement de l'échangeur de refroidissement tandis qu'un flux de fluide utilisateur est mis en circulation dans cet échangeur de refroidissement, le procédé comprenant, après cette étape refroidissement, une étape de nettoyage d'impuretés solidifiées dans l'échangeur de refroidissement.

L'invention concerne en particulier les réfrigérateurs ou liquéfacteurs cryogéniques, par exemple du type à cycle « Turbo Brayton » ou « refroidisseurs Turbo Brayton » dans lequel un gaz de cycle (hélium, azote, hydrogène ou autre gaz pur ou mélange) subit un cycle thermodynamique produisant du froid qui peut être transféré à une organe ou un gaz devant être refroidi.

Ces dispositifs sont utilisés dans une grande variété d'application et notamment pour refroidir du gaz naturel d'un réservoir (par exemple dans des bateaux). Le gaz naturel liquéfié est par exemple sous-refroidi pour éviter sa vaporisation ou la partie gazeuse est refroidie en vue de sa reliquéfaction.

Par exemple, un flux de gaz naturel peut être mis en circulation dans un échangeur de chaleur refroidi par le gaz de cycle du réfrigérateur/liquéfacteur.

Le gaz refroidi dans cet échangeur peut contenir des impuretés (tels que du dioxyde de carbone) qui sont susceptibles de se solidifier aux températures froides atteintes au niveau de l'échangeur. Ceci peut obstruer l'échangeur de chaleur et nuire à l'efficacité de l'installation.

Une solution peut consister à réchauffer activement avec un réchauffeur électrique l'échangeur de chaleur. Ceci est cependant coûteux en énergie et souvent mal adapté aux atmosphères explosives.

Un procédé et un dispositif conformes au préambule des revendications indépendantes 1 et 8 sont décrits dans US 2012/180520 A1.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, comprend les caractéristiques définies dans la revendication indépendante 1.

Par ailleurs, des modes de réalisation de l'invention peuvent comporter l'une ou plusieurs des caractéristiques telles que définies dans les revendications dépendantes 2 à 7.

L'invention concerne également un dispositif de réfrigération à basse température, c'est-à-dire à une température comprise entre moins 100 degrés centigrade et moins 273 degrés centigrade, selon la revendication indépendante 8.

Les modes de réalisation de l'invention préférés sont décrits dans les revendications dépendantes 9 à 10.

L'invention concerne également une installation de réfrigération et/ou de liquéfaction d'un flux de fluide utilisateur, notamment du gaz naturel, selon la revendication 11, comprenant un dispositif de réfrigération selon l'une quelconque des revendications 8 à 10, l'installation comprenant au moins un réservoir de fluide utilisateur, une conduite de circulation dudit flux de fluide utilisateur dans l'échangeur de refroidissement.

D'autres particularités et avantages apparaîtront à la lecture de la description ci-après, faite en référence aux figures dans lesquelles :

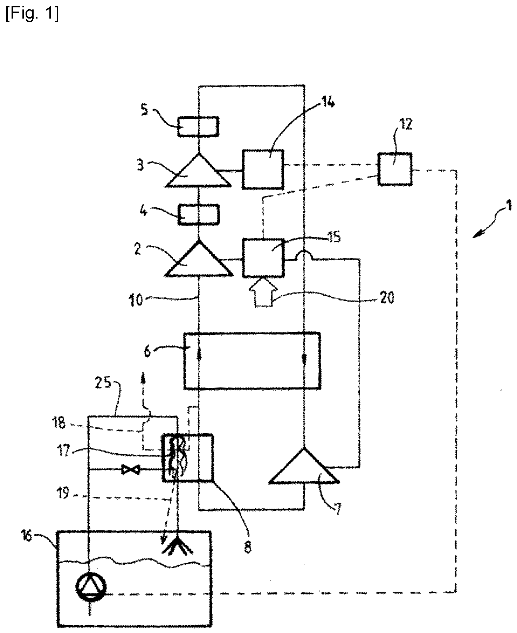

[Fig. 1] représente une vue schématique et partielle illustrant la structure et le fonctionnement d'un exemple de dispositif et d'installation pouvant mettre en œuvre l'invention.

L'installation de refroidissement et/ou de liquéfaction de la [Fig. 1] comprend un dispositif 1 de réfrigération fournissant du froid (une puissance de refroidissement) au niveau d'un l'échangeur 8 de refroidissement. L'installation comprend une conduite 25 de circulation d'un flux de fluide à refroidir mis en échange thermique avec cet échangeur 8 de refroidissement. Par exemple, le fluide est du gaz naturel liquide pompé dans un réservoir 16 (par exemple via une pompe), puis est refroidi (de préférence hors du réservoir 16) puis renvoyé dans le réservoir 16 (par exemple en pluie dans la phase gazeuse du réservoir 16). Ceci permet de refroidir ou sous-refroidir le contenu du réservoir 16 et de limiter les phénomènes de vaporisation. Par exemple, le liquide du réservoir 16 est sous refroidi en-dessous de sa température de saturation (baisse de sa température de plusieurs degrés K notamment 5 à 20K et notamment 14K) avant d'être réinjecté dans le réservoir 16. En variante cette réfrigération peut être apportée au gaz de vaporisation du réservoir en vue notamment de sa reliquéfaction. C'est-à-dire que le dispositif 1 de réfrigération produit une puissance froide au niveau de l'échangeur 8 de refroidissement.

Le dispositif 1 de réfrigération comprend un circuit de travail 10 (de préférence fermé) formant une boucle de circulation. Ce circuit 10 de travail contient un fluide de travail (hélium, azote, néon, hydrogène ou autre outre gaz ou mélange approprié (par exemple hélium et argon ou hélium et azote ou hélium et néon ou hélium et azote et néon).

Le circuit 10 de travail forme un cycle comprenant en série: un mécanisme 2, 3 de compression du fluide de travail, un mécanisme 6 de refroidissement du fluide de travail, un mécanisme 7 de détente du fluide de travail et un mécanisme 6, 8 de réchauffement du fluide de travail.

Le dispositif 1 comprend un échangeur de chaleur 8 de refroidissement destiné à extraire de la chaleur à au moins un organe 25 par échange de chaleur avec le fluide de travail circulant dans le circuit 10 de travail.

Les mécanismes de refroidissement et de réchauffage du fluide de travail comprennent classiquement un échangeur 6 de chaleur commun dans lequel le fluide de travail transite à contre-courant dans deux portions de transit distinctes du circuit 10 de travail selon qu'il est refroidi ou réchauffé.

L'échangeur 8 de chaleur de refroidissement est situé par exemple entre le mécanisme 7 de détente et l'échangeur 6 de chaleur commun. Comme illustré, l'échangeur 8 de chaleur de refroidissement peut être un échangeur de chaleur distinct de l'échangeur 6 de chaleur commun. Cependant, en variante, cet échangeur de chaleur 8 de refroidissement pourrait être constitué d'une portion de l'échangeur 6 de chaleur commun (c'est-à-dire que les deux échangeurs 6, 8 peuvent être monoblocs, c'est-à-dire peuvent avoir des circuits de fluides distincts qui partagent une même structure d'échange).

Ainsi, le fluide de travail qui sort relativement chaud du mécanisme 2, 3 de compression est refroidi dans l'échangeur 6 de chaleur commun avant d'entrer dans le mécanisme de détente 7. Le fluide de travail qui sort relativement froid du mécanisme 7 de détente et de l'échangeur de chaleur 8 de refroidissement est quant à lui réchauffé dans l'échangeur 6 de chaleur commun avant de retourner dans le mécanisme de compression 2 3 en vue de recommencer un nouveau cycle.

Classiquement, en mode de fonctionnement normal, appelé ci-après « premier mode de fonctionnement », le gaz de travail subit le cycle de compression, refroidissement, détente et réchauffage et produit du froid au niveau de l'échangeur 8 de refroidissement. Généralement un débit massique égal ou sensiblement égal circule les deux portions de transit dans l'échangeur 6 de chaleur commun.

Comme illustré, en mode de fonctionnement normal, un flux de fluide (gaz naturel liquéfié par exemple) peut être refroidi dans l'échangeur 8 de refroidissement. Dans le cas où ce fluide contient des impuretés (dioxyde de carbone ou autre) susceptibles de se solidifier lors de leur refroidissement, un bouchon 17 ou une obstruction peut survenir dans l'échangeur 8 de refroidissement.

Ce bouchon peut être supprimé par un étape de nettoyage réalisée par le dispositif 1 de réfrigération lui-même en adoptant un second mode de fonctionnement dans lequel le gaz de travail circule toujours dans le circuit 10 de travail comme décrit ci-dessus, mais dans lequel le refroidissement l'échangeur 8 de refroidissement est diminué par rapport au premier mode de fonctionnement.

Par exemple, le dispositif 1 de réfrigération assure ponctuellement un refroidissement nul ou assure un réchauffage de l'échangeur 8 de refroidissement.

Lors de ce nettoyage, un flux de fluide utilisateur peut est mis en circulation dans l'échangeur 8 de refroidissement pour entraîner les impuretés réchauffées par ce dernier. Le flux de fluide utilisateur peut être notamment réchauffé pendant ce second mode de fonctionnement.

Le mécanisme 2, 3 de compression comprend, selon l'invention, plusieurs compresseurs et au moins deux moteurs 14, 15 d'entraînement en rotation du ou des compresseurs 2, 3. De plus, de préférence la puissance de réfrigération du dispositif est variable et peut être contrôlée en régulant la vitesse de rotation d'au moins un des moteurs 14, 15 d'entraînement (vitesse de cycle). De préférence la puissance froide produite par le dispositif 1 peut être adaptée de 0 à 100% d'une puissance nominale ou maximale en changeant la vitesse de rotation du ou des moteurs 14, 15 entre une vitesse de rotation nulle et une vitesse maximale ou nominale. Une telle architecture permet de maintenir un rendement élevé sur une large plage de fonctionnement (par exemple 97% de rendement nominal à 50% de la puissance froide nominale).

Par exemple, dans le deuxième mode de fonctionnement, la vitesse de rotation d'au moins un des moteurs 14, 15 d'entraînement est réduite à une valeur comprise entre 1% et 60% et de préférence entre 10 et 50% notamment entre 20 et 30% de la vitesse de rotation dudit moteur 14, 15 pendant le premier mode de fonctionnement de refroidissement. Par exemple cette vitesse de rotation réduite correspond à entre 1% et 60% et de préférence entre 10 et 50% notamment entre 20 et 30% de la vitesse de rotation nominale ou maximale dudit moteur 14, 15.

Dans cette configuration, la puissance de réfrigération produite au niveau de l'échangeur 8 de refroidissement est diminuée ou annulée (voir de la chaleur y est produite). De cette façon, l'échangeur 8 de réchauffage va se réchauffer ce qui va provoquer une fusion puis vaporisation des impuretés solidifiées. Ce réchauffage, associé à éventuellement un écoulement de fluide utilisateur dans l'échangeur 8 de chaleur de refroidissement va entraîner ces impuretés hors de l'échangeur 8, par exemple vers le réservoir 16 de fluide utilisateur.

Dans l'exemple non limitatif représenté, le dispositif 1 de réfrigération comprend deux compresseurs 2, 3 en série entraînés respectivement par deux moteurs 14, 15 distincts et une turbine 7 accouplée à l'arbre d'entraînement d'un 15 des deux moteurs.

C'est-à-dire qu'un premier moteur 14 entraîne uniquement un compresseur 3 (moto-compresseur) tandis que l'autre moteur 15 entraîne un compresseur 2 et est accouplé à une turbine 7 (moto-turbocompresseur).

Par exemple, non conforme à l'invention, dans le deuxième mode de fonctionnement du dispositif (1) de réfrigération, le moteur 15 à l'arbre d'entraînement duquel est accouplé une turbine 7 est mis à l'arrêt et l'autre moteur 14 qui entraîne uniquement un compresseur 3 fonctionne avec une vitesse de rotation comprise entre 1% et 60% et de préférence entre 10 et 50% notamment entre 20 et 30% de la vitesse de rotation maximale ou de la vitesse nominale du moteur. Par vitesse nominale ou vitesse maximale d'un moteur on désigne la vitesse maximale que le moteur peut produire dans le cas d'une puissance de réfrigération maximale. Cette vitesse maximale ou nominale est la vitesse maximale conseillée pour le fonctionnement du dispositif 1 de réfrigération et peut le cas échant être inférieure à la vitesse maximale que peut atteindre le moteur intrinsèquement.

Dans cette configuration, la turbine 7 et le compresseur 2 accouplés à l'arbre d'entraînement du moteur 15 mis à l'arrêt peuvent être en roue libre.

Comme précédemment, le fonctionnement à vitesse réduite de l'autre moteur 14 va faire circuler le fluide de travail dans le circuit 10 de travail avec une efficacité faible. Le turbine 7 et le compresseur 2 en roue libre vont en outre ajouter des pertes de charges dans le circuit 10 de travail du gaz de travail. Ceci va augmenter le réchauffement relatif au niveau de l'échangeur 8 de refroidissement pour évacuer les impuretés, sans augmenter la consommation électrique du dispositif 1 déjà réduite.

Pour encore augmenter ce réchauffage et la rapidité du nettoyage des impuretés, une perte de charge supplémentaire peut être ajoutée dans ce mode de fonctionnement. Par exemple le moteur 15 mis à l'arrêt est freiné. Par exemple la rotation de son arbre et/ou du compresseur 2 et/ou de la turbine 7 correspondant (es) peut être freiné(es) ou bloqué (es). Ce freinage 20 ou blocage peut être mécanique via une butée mobile et/ou électrique et/ou magnétique. Par exemple, le ou les moteurs sont des moteurs électriques, notamment de type synchrone. Le freinage du moteur peut être réalisé en prévoyant une résistance de freinage dans son circuit de commande de ce mode de fonctionnement. De même un tel moteur électrique peut comporter un schéma électrique à trois des phases (triphasé) qui peuvent être court-circuitées momentanément pour assurer ce freinage. Le moteur 15 peut notamment être réversible et le freinage peut être obtenu en commutant de son mode inverse générateur dans lequel au lieu de produire un couple il va produire un courant et freiner son arbre d'entraînement.

Ces modes de freinages peuvent être disponibles sur les circuits de commande (variateurs) de tels moteurs électriques. Ainsi, un simple contrôle logiciel permet d'assurer ces modes de freinage sans modifier la structure préexistante du moteur.

Dans encore une autre variante de réalisation, selon l'invention, dans le deuxième mode de fonctionnement, au moins un moteur 15, par exemple un moteur comprenant une turbine 7 solidaire en rotation de son arbre est mis en rotation en sens inverse.

C'est-à-dire que dans le premier mode de fonctionnement du dispositif 1 de réfrigération, les arbres rotatifs des moteurs 14, 15 d'entraînement tournent selon de premiers sens de rotation respectifs et le fluide de travail circule dans le circuit 10 de travail selon un premier sens de circulation et dans le deuxième mode de fonctionnement du dispositif 1 de réfrigération, au moins un moteur 15 de préférence à l'arbre duquel est accouplée une turbine 7 est mis en rotation en sens inverse, c'est-à-dire que son arbre de rotation tourne dans le sens de rotation opposé au premier sens de rotation.

Le fluide de travail va continuer à circuler dans le premier sens de circulation dans circuit 10 de travail mais la rotation inverse de la turbine 7 notamment (qui n'est pas optimisée pour ce sens) va, au lieu d'extraire du travail mécanique au gaz de travail (détente), va lui en fournir et donc le réchauffer. Ceci fonctionne en particulier avec une technologie de turbines sont de type centripète. De préférence également la ou les compresseurs sont du type centrifuge.

Pendant que ce moteur 15 est mis en rotation en sens inverse (à l'envers), l'autre moteur14 (ou les autres moteurs s'il y en a plusieurs) peuvent être mis à l'arrêt, notamment en roue libre cependant, de préférence l'autre moteur14 (ou les autres moteurs) sont mis en fonctionnement avec une vitesse de rotation réduite. Par exemple cet autre moteur 14 (ou au moins un des autres moteurs) est mis en rotation à une vitesse comprise entre 1% et 60% et de préférence entre 10 et 50% notamment entre 20 et 30% de la vitesse de rotation maximale ou nominale dudit moteur 14.

Cette vitesse réduite du ou des moteurs augmente l'efficacité du réchauffage et permet un redémarrage plus rapide et plus efficace du dispositif de réfrigération dans le premier mode de fonctionnement de refroidissement.

De préférence, le ou les moteurs 14 mis en rotation en sens inverse est mis en rotation à une vitesse réduite, par exemple à une vitesse comprise entre 1% et 60% et de préférence entre 10 et 50% notamment entre 20 et 30% de la vitesse de rotation maximale ou nominale dudit moteur.

Dans une variante possible cependant, la vitesse de rotation en sens inverse pourrait être plus élevée et pourrait atteindre la vitesse nominale ou maximale du moteur.

Selon l'invention telle que définie dans la revendication indépendante 8, le dispositif comprend au moins un contrôleur 12 électronique raccordé à tout ou partie des organes de l'installation (moteurs, vannes, pompe...). Le contrôleur 12 électronique peut comprendre un microprocesseur ou un ordinateur et peut être configuré pour piloter de façon dynamique tout ou partie des organes de l'installation et est configuré pour assurer les modes de fonctionnement décrits ci-dessus (automatiquement et/ou en réponse à une commande, notamment d'un utilisateur).

Par exemple, la commutation dans le deuxième mode de fonctionnement du dispositif 1 de réfrigération pour assurer le nettoyage de l'échangeur 8 de refroidissement peut être commandée par un utilisateur et/ou en réponse à la détection d'un bouchon d'impureté dans l'échangeur 8 de refroidissement (capteur de pression ou autre dans le circuit).

De plus, le contrôleur 12 électronique peut être configuré (programmé ou commandé) pour contrôler de façon dynamique le réchauffement de l'échangeur 8 de refroidissement dans le second mode de fonctionnement. Par exemple, ce contrôle (la puissance de réchauffement relatif par rapport au premier mode de fonctionnement) peut être asservi à la vitesse de montée en température de l'échangeur 6 de chaleur commun selon un profil déterminé et/ou pour limiter vitesse de montée en température de l'échangeur 6 de chaleur commun en dessous un seuil déterminé. Ceci peut permettre d'éviter un réchauffage trop rapide de l'échangeur 6 de chaleur commun et/ou de l'échangeur 8 de refroidissement ce qui est avantageux dans le cas par exemple d'un échangeur à plaque en aluminium.

Dans l'exemple représenté, le dispositif 1 de réfrigération comprend deux compresseurs 2, 3 formant deux étages de compression et une turbine 7 de détente. C'est-à-dire que le mécanisme de compression comprend deux compresseurs 2, 3 en série, de préférence du type centrifuge et le mécanisme de détente comprend une unique turbine 7, de préférence centripète. Bien entendu, tout autre nombre et arrangement de compresseur(s) et turbine peut être envisagé, par exemple trois compresseurs en série et une turbine ou trois compresseurs et deux ou trois turbines ou deux compresseurs et deux turbines...

Dans l'exemple illustré, un échangeur 4, 5 de refroidissement est prévu à la sortie de chaque compresseur 2, 3 (par exemple un refroidissement par échange de chaleur avec de l'eau à température ambiante ou tout autre fluide ou agent de refroidissement).

Ceci permet de réaliser une compression isentropique ou isotherme ou sensiblement isotherme. Bien entendu, tout autre agencement peut être envisagé (par exemple pas d'échangeur 4, 5 de refroidissement à un ou plusieurs des étages de compression). De même un échangeur de réchauffage peut être prévu ou non en sortie de tout ou partie des turbines 7 de détente pour réaliser une détente isentropique ou isotherme. De préférence également, les réchauffage et refroidissement du fluide de travail sont de préférence isobares sans que ceci soit limitatif.

Par exemple, le dispositif 1 comprend deux moteurs 14, 15 à haute vitesse (par exemple 10000 tours par minute ou plusieurs dizaines de milliers de tours par minute) d'entrainement respectifs des étages de compression 2, 3. La turbine 7 peut être accouplée au moteur 2 de l'un des étages de compression 2, 3, c'est-à-dire que le dispositif peut posséder une turbine 8 constituant le mécanisme de détente qui est accouplée au moteur 2 d'entraînement d'un étage 2 de compression (le premier notamment).

Ainsi, la puissance de la ou des turbines 7 peut être avantageusement récupérée et utilisée pour réduire la consommation du ou des moteurs. Ainsi, en augmentant la vitesse des moteurs (et donc le débit dans le cycle du gaz de travail), on augmente la puissance de réfrigération produite et donc la consommation électrique du liquéfacteur (et inversement). Les compresseurs 2, 3 et turbine(s) 7 sont de préférence accouplés de façon directe à un arbre de sortie du moteur concerné (sans mécanisme de transmission de mouvement à engrenages).

Les arbres de sortie des moteurs sont de préférence montés sur des paliers de type magnétique ou de type dynamique à gaz. Les paliers sont utilisés pour sustenter les compresseurs et les turbines.

De plus, tout ou partie du dispositif, notamment ses organes froids peuvent être logés dans un carter étanche isolé thermiquement (notamment une enceinte sous vide contenant l'échangeur de chaleur commun à contre-courant).

Pour encore améliorer l'efficacité et la rapidité au processus, simultanément et/ou postérieurement à l'étape de nettoyage, il peut être prévu une purge 18 de l'échangeur 8 de refroidissement avec un flux de fluide de purge injecté dans l'échangeur 8 de refroidissement pour balayer et évacuer hors de l'échangeur 8 de refroidissement les impuretés détachées lors de l'étape de nettoyage.

Par exemple, un circuit 18 de gaz neutre ou autre (azote par exemple) peut être prévu pour purger les impuretés réchauffées. Cette purge peut remplacer le cas échant la mise en circulation du flux de fluide utilisateur lors du réchauffage. Le mélange obtenu peut être évacué vers une zone de décharge (vers l'atmosphère par exemple).

Alternativement cette purge 18 peut être réalisée avec un flux de fluide utilisateur. Par exemple, une fraction de fluide utilisateur est prélevé sur le conduite 12 de circulation (via une dérivation munie d'une vanne par exemple). Le fluide utilisateur de purge peut se vaporiser dans l'échangeur 8 de refroidissement et dégager les impuretés. Le mélange obtenu peut être renvoyé vers l'extérieur ou une zone de récupération et peut notamment être réinjecté dans le réservoir 16 de fluide utilisateur.

L'invention peut s'appliquer à un procédé de refroidissement et/ou de liquéfaction d'un autre fluide ou mélange, notamment de l'hydrogène.

## Revendications

1. Procédé de réfrigération et/ou de liquéfaction d'un flux de fluide utilisateur, notamment du gaz naturel, le procédé utilisant une installation de refroidissement et/ou de liquéfaction comprenant un dispositif (1) de réfrigération à basse température, c'est-à-dire à une température comprise entre moins 100 degrés centigrade et moins 273 degrés centigrade, le dispositif (1) de réfrigération comprenant un circuit de travail (10) formant une boucle et contenant un fluide de travail, le circuit (10) de travail formant un cycle comprenant en série: un mécanisme (2, 3) de compression du fluide de travail, un mécanisme (6) de refroidissement du fluide de travail, un mécanisme (7) de détente du fluide de travail et un mécanisme (6, 8) de réchauffement du fluide de travail, le dispositif (1) de réfrigération comprenant un échangeur (8) de refroidissement destiné à extraire de la chaleur au flux de fluide utilisateur par échange de chaleur avec le fluide de travail circulant dans le circuit (10) de travail, l'installation comprenant une conduite (15) de circulation dudit flux de fluide utilisateur dans l'échangeur (8) de refroidissement, le procédé comprenant une étape de refroidissement dans lequel le dispositif (1) de réfrigération est dans un premier mode de fonctionnement de refroidissement de l'échangeur (8) de refroidissement tandis qu'un flux de fluide utilisateur est mis en circulation dans cet échangeur (8) de refroidissement, le procédé comprenant, après cette étape refroidissement, une étape de nettoyage d'impuretés solidifiées dans l'échangeur (8) de refroidissement, où lors de l'étape de nettoyage, le dispositif (1) de réfrigération étant dans un deuxième mode de fonctionnement dans lequel le gaz de travail circule dans le circuit (10) de travail mais dans lequel le refroidissement l'échangeur (8) de refroidissement est diminué par rapport au premier mode de fonctionnement, **caractérisé en ce que** le mécanisme de compression comprend plusieurs compresseurs (2, 3) rotatifs et au moins deux moteurs (14, 15) d'entraînement comprenant chacun un arbre d'entraînement rotatif, les compresseurs (2, 3) étant entraînés en rotation par le ou les arbres rotatifs respectifs, le mécanisme de détente du fluide de travail comprenant au moins une turbine (7) rotative solidaire en rotation d'un arbre d'un des moteurs (14, 15) d'entraînement d'au moins un compresseur (2), et **en ce que** dans le premier mode de fonctionnement du dispositif (1) de réfrigération, les arbres rotatifs des moteurs (14, 15) d'entraînement tournent selon de premiers sens de rotation respectifs et le fluide de travail circule dans le circuit (10) de travail selon un premier sens de circulation et **en ce que**, dans le deuxième mode de fonctionnement du dispositif (1) de réfrigération, au moins un moteur (15) des moteurs (14, 15) d'entraînement, notamment le moteur (15) à l'arbre duquel est accouplée la turbine (7), est mis en rotation en sens inverse, c'est-à-dire que son arbre de rotation tourne dans le sens de rotation opposé au premier sens de rotation.

2. Procédé selon la revendication 1, **caractérisé en ce que**, lors de l'étape de nettoyage, le dispositif (1) de réfrigération assure un refroidissement nul ou assure un réchauffage de l'échangeur (8) de refroidissement.

3. Procédé selon la revendication 1 ou 2, **caractérisé en ce que**, lors de l'étape de nettoyage, un flux de fluide utilisateur est mis en circulation dans l'échangeur (8) de refroidissement et est réchauffé par ce dernier.

4. Procédé selon l'une quelconque des revendications 1 à 3, **caractérisé en ce que** la puissance de réfrigération du dispositif (1) de réfrigération étant variable et contrôlée en régulant la vitesse de rotation d'au moins un des moteurs (14, 15) d'entraînement, et **en ce que**, dans le deuxième mode de fonctionnement, la vitesse de rotation d'au moins un des moteurs (14, 15) d'entraînement est comprise entre 1% et 60% et de préférence entre 10 et 50% notamment entre 20 et 30% de la vitesse de rotation maximale ou nominale dudit moteur (14, 15).

5. Procédé selon l'une quelconque des revendications 1 à 4, **caractérisé en ce que** le au moins un compresseur (2) entraîné par le moteur (15) comprenant la turbine (7) solidaire en rotation de son arbre est du type centrifuge et **en ce que**, dans le deuxième mode de fonctionnement du dispositif (1) de réfrigération, le fluide de travail circule dans le circuit (10) de travail selon le premier sens de circulation.

6. Procédé selon l'une quelconque des revendications 1 à 5, **caractérisé en ce que**, dans le deuxième mode de fonctionnement du dispositif (1) de réfrigération, au moins un moteur (14) d'entraînement des moteurs (14, 15) d'entraînement distinct du moteur (2) mis en rotation en sens inverse est mis à l'arrêt ou fonctionne avec une vitesse de rotation comprise entre 1% et 60% et de préférence entre 10 et 50% notamment entre 20 et 30% de la vitesse maximale ou nominale dudit moteur (14).

7. Procédé selon l'une quelconque des revendications 1 à 6, **caractérisé en ce que** la mise en circulation d'un flux de fluide utilisateur dans l'échangeur (8) de refroidissement est réalisée par pompage dans un réservoir (16) de fluide utilisateur et **en ce que** le fluide utilisateur ayant échangé thermiquement avec l'échangeur (8) de refroidissement est renvoyé dans le réservoir (16).

8. Dispositif de réfrigération à basse température, c'est-à-dire à une température comprise entre moins 100 degrés centigrade et moins 273 degrés centigrade, comprenant un circuit de travail (10) formant une boucle et contenant un fluide de travail, le circuit (10) de travail formant un cycle comprenant en série: un mécanisme (2, 3) de compression du fluide de travail, un mécanisme (6) de refroidissement du fluide de travail, un mécanisme (7) de détente du fluide de travail et un mécanisme (6) de réchauffement du fluide de travail, le dispositif (1) comprenant un échangeur (8) de refroidissement destiné à extraire de la chaleur à au moins un organe (25) par échange de chaleur avec le fluide de travail circulant dans le circuit (10) de travail, le dispositif de réfrigération comprenant un contrôleur (12) électronique configuré pour contrôler la puissance de réfrigération du dispositif (1) de réfrigération et commuter le dispositif (1) de réfrigération dans un premier mode de fonctionnement de refroidissement de l'échangeur (8) de refroidissement pour refroidir un flux de fluide utilisateur mis en circulation dans cet échangeur (8) de refroidissement, et un mode de nettoyage d'impuretés solidifiées dans l'échangeur (8) de refroidissement, dans le mode de nettoyage, le contrôleur (12) électronique étant configuré pour abaisser la puissance de réfrigération du dispositif (1) de réfrigération et diminuer le refroidissement de l'échangeur (8) de refroidissement par rapport au premier mode de fonctionnement, **caractérisé en ce que** le mécanisme de compression comprend plusieurs compresseurs (2, 3) rotatifs et au moins deux moteurs (14, 15) d'entraînement comprenant chacun un arbre d'entraînement rotatif, les compresseurs (2, 3) étant entraînés en rotation par le ou les arbres rotatifs respectifs, le mécanisme de détente du fluide de travail comprenant au moins une turbine (7) rotative solidaire en rotation d'un arbre d'un des moteurs (14, 15) d'entraînement d'au moins un compresseur (2) et **caractérisé en ce que** dans le premier mode de fonctionnement, les moteurs (14, 15) d'entraînement sont configurés faire tourner leurs arbres rotatifs selon de premiers sens de rotation respectifs, et **en ce qu'**au moins le moteur (15) comprenant la turbine (7) solidaire en rotation de son arbre est du type à sens de rotation réversible et **en ce que** le contrôleur (12) électronique est configuré pour faire tourner ledit moteur (15) dans le sens de rotation opposé au premier sens de rotation lors du deuxième mode de fonctionnement du dispositif (1) de réfrigération.

9. Dispositif selon la revendication 8, **caractérisé en ce que** la puissance de réfrigération du dispositif (1) de réfrigération étant variable et contrôlée en régulant la vitesse de rotation d'au moins un des moteurs (14, 15) d'entraînement, et **en ce que**, le contrôleur (12) électronique est configuré pour établir la vitesse de rotation d'au moins un des moteurs (14, 15) d'entraînement dans le deuxième mode de fonctionnement à une valeur comprise entre 2% et 60% et de préférence entre 10 et 50% notamment entre 20 et 30% de la vitesse maximale ou nominale dudit moteur (14, 15).

10. Dispositif selon l'une quelconque des revendications 8 à 9, **caractérisé en ce que** dans le deuxième mode de fonctionnement du dispositif (1) de réfrigération, le contrôleur (12) électronique est configuré pour mettre à l'arrêt au moins un moteur (14) d'entraînement des moteurs (14, 15) d'entraînement distinct du moteur (2) mis en rotation en sens inverse, ou pour limiter la vitesse de rotation de ce moteur d'entraînement distinct du moteur (2) mis en rotation en sens inverse à une valeur comprise entre 1% et 60% et de préférence entre 10 et 50% notamment entre 20 et 30% de la vitesse de rotation dudit moteur (2) pendant le premier mode de fonctionnement.

11. Installation de réfrigération et/ou de liquéfaction d'un flux de fluide utilisateur, notamment du gaz naturel, comprenant un dispositif (1) de réfrigération selon l'une quelconque des revendications 8 à 10, l'installation comprenant au moins un réservoir (16) de fluide utilisateur, une conduite (25) de circulation dudit flux de fluide utilisateur dans l'échangeur (8) de refroidissement.

## Patentansprüche

1. Ein Verfahren zur Kühlung und/oder Verflüssigung eines Nutzerfluidstroms, insbesondere Erdgas, wobei das Verfahren eine Kühl- und/oder Verflüssigungsanlage verwendet, die eine Niedertemperatur-Kühlvorrichtung (1) umfasst, das heißt, bei einer Temperatur zwischen minus 100 Grad Celsius und minus 273 Grad Celsius, wobei die Kühlvorrichtung (1) einen Arbeitskreislauf (10) umfasst, der eine Schleife bildet und ein Arbeitsfluid enthält, wobei der Arbeitskreislauf (10) einen Kreislauf bildet, der in Reihe umfasst: einen Mechanismus (2, 3) zum Verdichten des Arbeitsfluids, einen Mechanismus (6) zum Kühlen des Arbeitsfluids, einen Mechanismus (7) zur Entspannung des Arbeitsfluids und einen Mechanismus (6, 8) zur Wiedererwärmung des Arbeitsfluids, wobei die Kühlvorrichtung (1) einen Kühlwärmetauscher (8) umfasst, der dazu bestimmt ist, dem Nutzerfluidstrom Wärme durch Wärmetausch mit dem im Arbeitskreislauf (10) zirkulierenden Arbeitsfluid zu entziehen, wobei die Anlage eine Zirkulationsleitung (15) für den genannten Nutzerfluidstrom in dem Kühlwärmetauscher (8) umfasst, wobei das Verfahren einen Kühlschritt umfasst, bei dem die Kühlvorrichtung (1) in einem ersten Betriebsmodus zur Kühlung des Kühlwärmetauschers (8) ist, während ein Nutzerfluidstrom in diesem Kühlwärmetauscher (8) in Umlauf gebracht wird, wobei das Verfahren nach diesem Kühlschritt einen Reinigungsschritt für verfestigte Verunreinigungen in dem Kühlwärmetauscher (8) umfasst, wobei während des Reinigungsschritts die Kühlvorrichtung (1) in einem zweiten Betriebsmodus ist, in dem das Arbeitsgas in dem Arbeitskreislauf (10) zirkuliert, aber in dem die Kühlung des Wärmetauschers (8) im Vergleich zum ersten Betriebsmodus reduziert ist, **dadurch gekennzeichnet, dass** der Verdichtungsmechanismus mehrere rotierende Verdichter (2, 3) und mindestens zwei Antriebsmotoren (14, 15) umfasst, die jeweils eine rotierende Antriebswelle umfassen, wobei die Verdichter (2, 3) durch die jeweilige(n) rotierende(n) Welle(n) angetrieben werden, wobei der Entspannungsmechanismus des Arbeitsfluids mindestens eine rotierende Turbine (7) umfasst, die rotationsfest mit einer Welle eines der Antriebsmotoren (14, 15) von mindestens einem Verdichter (2) verbunden ist, und dadurch, dass in dem ersten Betriebsmodus der Kühlvorrichtung (1) die rotierenden Wellen der Antriebsmotoren (14, 15) sich gemäß ersten jeweiligen Drehrichtungen drehen und das Arbeitsfluid in dem Arbeitskreislauf (10) gemäß einer ersten Zirkulationsrichtung zirkuliert, und dadurch, dass in dem zweiten Betriebsmodus der Kühlvorrichtung (1) mindestens ein Motor (15) der Antriebsmotoren (14, 15), insbesondere der Motor (15), an dessen Welle die Turbine (7) gekoppelt ist, in umgekehrte Drehrichtung versetzt wird, das heißt, dass seine Drehwelle sich in der der ersten Drehrichtung entgegengesetzten Drehrichtung dreht.

2. Verfahren nach Anspruch 1, **dadurch gekennzeichnet, dass** die Kühlvorrichtung (1) während des Reinigungsschritts eine Nulllühlung oder eine Wiedererwärmung des Kühlwärmetauschers (8) gewährleistet.

3. Verfahren nach Anspruch 1 oder 2, **dadurch gekennzeichnet, dass** während des Reinigungsschritts ein Nutzerfluidstrom in dem Kühlwärmetauscher (8) in Umlauf gebracht und durch diesen wiedererwärmt wird.

4. Verfahren nach einem der Ansprüche 1 bis 3, **dadurch gekennzeichnet, dass** die Kälteleistung der Kühlvorrichtung (1) variabel und durch Regulierung der Drehzahl von mindestens einem der Antriebsmotoren (14, 15) gesteuert wird, und dadurch, dass in dem zweiten Betriebsmodus die Drehzahl von mindestens einem der Antriebsmotoren (14, 15) zwischen 1% und 60% und vorzugsweise zwischen 10% und 50%, insbesondere zwischen 20% und 30% der maximalen oder nominalen Drehzahl des genannten Motors (14, 15) liegt.

5. Verfahren nach einem der Ansprüche 1 bis 4, **dadurch gekennzeichnet, dass** der mindestens eine Verdichter (2), der von dem Motor (15) angetrieben wird, der die rotationsfest mit seiner Welle verbundene Turbine (7) umfasst, vom Zentrifugaltyp ist, und dadurch, dass in dem zweiten Betriebsmodus der Kühlvorrichtung (1) das Arbeitsfluid in dem Arbeitskreislauf (10) gemäß der ersten Zirkulationsrichtung zirkuliert.

6. Verfahren nach einem der Ansprüche 1 bis 5, **dadurch gekennzeichnet, dass** in dem zweiten Betriebsmodus der Kühlvorrichtung (1) mindestens ein Antriebsmotor (14) der Antriebsmotoren (14, 15), der sich von dem in umgekehrte Drehrichtung versetzten Motor (2) unterscheidet, angehalten wird oder mit einer Drehzahl arbeitet, die zwischen 1% und 60% und vorzugsweise zwischen 10% und 50%, insbesondere zwischen 20% und 30% der maximalen oder nominalen Drehzahl des genannten Motors (14) liegt.

7. Verfahren nach einem der Ansprüche 1 bis 6, **dadurch gekennzeichnet, dass** die Zirkulation eines Nutzerfluidstroms in dem Kühlwärmetauscher (8) durch Pumpen in einen Nutzerfluid-Speicher (16) durchgeführt wird und dadurch, dass das Nutzerfluid, das einen Wärmetausch mit dem Kühlwärmetauscher (8) hatte, in den Speicher (16) zurückgeführt wird.

8. Eine Vorrichtung zur Niedertemperaturkühlung, das heißt, bei einer Temperatur zwischen minus 100 Grad Celsius und minus 273 Grad Celsius, umfassend einen Arbeitskreislauf (10), der eine Schleife bildet und ein Arbeitsfluid enthält, wobei der Arbeitskreislauf (10) einen Kreislauf bildet, der in Reihe umfasst: einen Mechanismus (2, 3) zum Verdichten des Arbeitsfluids, einen Mechanismus (6) zum Kühlen des Arbeitsfluids, einen Mechanismus (7) zur Entspannung des Arbeitsfluids und einen Mechanismus (6) zur Wiedererwärmung des Arbeitsfluids, wobei die Vorrichtung (1) einen Kühlwärmetauscher (8) umfasst, der dazu bestimmt ist, Wärme aus mindestens einem Organ (25) durch Wärmetausch mit dem im Arbeitskreislauf (10) zirkulierenden Arbeitsfluid zu entziehen, wobei die Kühlvorrichtung einen elektronischen Regler (12) umfasst, der dazu konfiguriert ist, die Kälteleistung der Kühlvorrichtung (1) zu steuern und die Kühlvorrichtung (1) in einen ersten Betriebsmodus zur Kühlung des Kühlwärmetauschers (8) umzuschalten, um einen in diesem Kühlwärmetauscher (8) in Umlauf gebrachten Nutzerfluidstrom zu kühlen, und in einen Reinigungsmodus für verfestigte Verunreinigungen in dem Kühlwärmetauscher (8), wobei in dem Reinigungsmodus der elektronische Regler (12) dazu konfiguriert ist, die Kälteleistung der Kühlvorrichtung (1) zu senken und die Kühlung des Kühlwärmetauschers (8) im Vergleich zum ersten Betriebsmodus zu reduzieren, **dadurch gekennzeichnet, dass** der Verdichtungsmechanismus mehrere rotierende Verdichter (2, 3) und mindestens zwei Antriebsmotoren (14, 15) umfasst, die jeweils eine rotierende Antriebswelle umfassen, wobei die Verdichter (2, 3) durch die jeweilige(n) rotierende(n) Welle(n) angetrieben werden, wobei der Entspannungsmechanismus des Arbeitsfluids mindestens eine rotierende Turbine (7) umfasst, die rotationsfest mit einer Welle eines der Antriebsmotoren (14, 15) von mindestens einem Verdichter (2) verbunden ist, und **dadurch gekennzeichnet, dass** in dem ersten Betriebsmodus die Antriebsmotoren (14, 15) dazu konfiguriert sind, ihre rotierenden Wellen gemäß ersten jeweiligen Drehrichtungen zu drehen, und dadurch, dass mindestens der Motor (15), der die rotationsfest mit seiner Welle verbundene Turbine (7) umfasst, vom Typ mit reversibler Drehrichtung ist und dadurch, dass der elektronische Regler (12) dazu konfiguriert ist, den genannten Motor (15) während des zweiten Betriebsmodus der Kühlvorrichtung (1) in der der ersten Drehrichtung entgegengesetzten Drehrichtung drehen zu lassen.

9. Vorrichtung nach Anspruch 8, **dadurch gekennzeichnet, dass** die Kälteleistung der Kühlvorrichtung (1) variabel und durch Regulierung der Drehzahl von mindestens einem der Antriebsmotoren (14, 15) gesteuert wird, und dadurch, dass der elektronische Regler (12) dazu konfiguriert ist, die Drehzahl von mindestens einem der Antriebsmotoren (14, 15) in dem zweiten Betriebsmodus auf einen Wert festzulegen, der zwischen 2% und 60% und vorzugsweise zwischen 10% und 50%, insbesondere zwischen 20% und 30% der maximalen oder nominalen Drehzahl des genannten Motors (14, 15) liegt.

10. Vorrichtung nach einem der Ansprüche 8 bis 9, **dadurch gekennzeichnet, dass** der elektronische Regler (12) in dem zweiten Betriebsmodus der Kühlvorrichtung (1) dazu konfiguriert ist, mindestens einen Antriebsmotor (14) der Antriebsmotoren (14, 15), der sich von dem in umgekehrte Drehrichtung versetzten Motor (2) unterscheidet, anzuhalten, oder die Drehzahl dieses von dem in umgekehrte Drehrichtung versetzten Motor (2) unterschiedlichen Antriebsmotors auf einen Wert zu begrenzen, der zwischen 1% und 60% und vorzugsweise zwischen 10% und 50%, insbesondere zwischen 20% und 30% der Drehzahl des genannten Motors (2) während des ersten Betriebsmodus liegt.

11. Eine Anlage zur Kühlung und/oder Verflüssigung eines Nutzerfluidstroms, insbesondere Erdgas, umfassend eine Kühlvorrichtung (1) nach einem der Ansprüche 8 bis 10, wobei die Anlage mindestens einen Nutzerfluid-Speicher (16), eine Zirkulationsleitung (25) für den genannten Nutzerfluidstrom in dem Kühlwärmetauscher (8) umfasst.

## Claims

1. A method of refrigeration and/or liquefaction of a user fluid flow, notably natural gas, the method utilizing a cooling and/or liquefaction installation comprising a low-temperature refrigeration device (1), i.e. at a temperature comprised between minus 100 degrees centigrade and minus 273 degrees centigrade, the refrigeration device (1) comprising a working circuit (10) forming a loop and containing a working fluid, the working circuit (10) forming a cycle comprising in series: a mechanism (2, 3) for compressing the working fluid, a mechanism (6) for cooling the working fluid, a mechanism (7) for expanding the working fluid and a mechanism (6, 8) for reheating the working fluid, the refrigeration device (1) comprising a cooling exchanger (8) intended to extract heat from the user fluid flow by heat exchange with the working fluid circulating in the working circuit (10), the installation comprising a circulation line (15) for said user fluid flow in the cooling exchanger (8), the method comprising a cooling step in which the refrigeration device (1) is in a first operational cooling mode of the cooling exchanger (8) while a user fluid flow is circulated in this cooling exchanger (8), the method comprising, after this cooling step, a cleaning step for solidified impurities in the cooling exchanger (8), wherein, during the cleaning step, the refrigeration device (1) being in a second operational mode in which the working gas circulates in the working circuit (10) but in which the cooling of the exchanger (8) is reduced compared to the first operational mode, **characterized in that** the compression mechanism comprises several rotary compressors (2, 3) and at least two drive motors (14, 15), each comprising a rotating drive shaft, the compressors (2, 3) being driven in rotation by the respective rotating shaft(s), the working fluid expansion mechanism comprising at least one rotary turbine (7) integral in rotation with a shaft of one of the drive motors (14, 15) of at least one compressor (2), and **in that** in the first operational mode of the refrigeration device (1), the rotating shafts of the drive motors (14, 15) turn according to first respective rotation directions and the working fluid circulates in the working circuit (10) according to a first circulation direction and **in that**, in the second operational mode of the refrigeration device (1), at least one motor (15) of the drive motors (14, 15), notably the motor (15) to whose shaft the turbine (7) is coupled, is set in reverse rotation, that is to say that its rotation shaft turns in the rotation direction opposite to the first rotation direction.

2. The method according to claim 1, **characterized in that**, during the cleaning step, the refrigeration device (1) ensures zero cooling or ensures heating of the cooling exchanger (8).

3. The method according to claim 1 or 2, **characterized in that**, during the cleaning step, a user fluid flow is circulated in the cooling exchanger (8) and is reheated by the latter.

4. The method according to any one of claims 1 to 3, **characterized in that** the refrigeration capacity of the refrigeration device (1) is variable and controlled by regulating the rotation speed of at least one of the drive motors (14, 15), and **in that**, in the second operational mode, the rotation speed of at least one of the drive motors (14, 15) is comprised between 1% and 60% and preferably between 10% and 50%, notably between 20% and 30% of the maximum or nominal rotation speed of said motor (14, 15).

5. The method according to any one of claims 1 to 4, **characterized in that** the at least one compressor (2) driven by the motor (15) comprising the turbine (7) integral in rotation with its shaft is of the centrifugal type, and **in that**, in the second operational mode of the refrigeration device (1), the working fluid circulates in the working circuit (10) according to the first circulation direction.

6. The method according to any one of claims 1 to 5, **characterized in that**, in the second operational mode of the refrigeration device (1), at least one drive motor (14) of the drive motors (14, 15) distinct from the motor (2) set in reverse rotation is set to stop or operates with a rotation speed comprised between 1% and 60% and preferably between 10% and 50%, notably between 20% and 30% of the maximum or nominal rotation speed of said motor (14).

7. The method according to any one of claims 1 to 6, **characterized in that** the circulation of a user fluid flow in the cooling exchanger (8) is carried out by pumping into a user fluid reservoir (16) and **in that** the user fluid having undergone thermal exchange with the cooling exchanger (8) is returned to the reservoir (16).

8. An apparatus for low-temperature refrigeration, i.e. at a temperature comprised between minus 100 degrees centigrade and minus 273 degrees centigrade, comprising a working circuit (10) forming a loop and containing a working fluid, the working circuit (10) forming a cycle comprising in series: a mechanism (2, 3) for compressing the working fluid, a mechanism (6) for cooling the working fluid, a mechanism (7) for expanding the working fluid and a mechanism (6) for reheating the working fluid, the device (1) comprising a cooling exchanger (8) intended to extract heat from at least one organ (25) by heat exchange with the working fluid circulating in the working circuit (10), the refrigeration device comprising an electronic controller (12) configured to control the refrigeration capacity of the refrigeration device (1) and to switch the refrigeration device (1) into a first operational cooling mode of the cooling exchanger (8) to cool a user fluid flow circulated in this cooling exchanger (8), and a cleaning mode for solidified impurities in the cooling exchanger (8), wherein, in the cleaning mode, the electronic controller (12) being configured to lower the refrigeration capacity of the refrigeration device (1) and to reduce the cooling of the cooling exchanger (8) compared to the first operational mode, **characterized in that** the compression mechanism comprises several rotary compressors (2, 3) and at least two drive motors (14, 15), each comprising a rotating drive shaft, the compressors (2, 3) being driven in rotation by the respective rotating shaft(s), the working fluid expansion mechanism comprising at least one rotary turbine (7) integral in rotation with a shaft of one of the drive motors (14, 15) of at least one compressor (2) and **characterized in that** in the first operational mode, the drive motors (14, 15) are configured to turn their rotating shafts according to first respective rotation directions, and **in that** at least the motor (15) comprising the turbine (7) integral in rotation with its shaft is of the reversible rotation direction type and **in that** the electronic controller (12) is configured to turn said motor (15) in the rotation direction opposite to the first rotation direction during the second operational mode of the refrigeration device (1).

9. The apparatus according to claim 8, **characterized in that** the refrigeration capacity of the refrigeration device (1) is variable and controlled by regulating the rotation speed of at least one of the motors (14, 15) of drive, and **in that**, the electronic controller (12) is configured to establish the rotation speed of at least one of the drive motors (14, 15) in the second operational mode at a value comprised between 2% and 60% and preferably between 10% and 50%, notably between 20% and 30% of the maximum or nominal rotation speed of said motor (14, 15).

10. The apparatus according to any one of claims 8 to 9, **characterized in that** in the second operational mode of the refrigeration device (1), the electronic controller (12) is configured to set to stop at least one drive motor (14) of the drive motors (14, 15) distinct from the motor (2) set in reverse rotation, or to limit the rotation speed of this drive motor distinct from the motor (2) set in reverse rotation to a value comprised between 1% and 60% and preferably between 10% and 50%, notably between 20% and 30% of the rotation speed of said motor (2) during the first operational mode of operation.

11. An installation for refrigeration and/or liquefaction of a user fluid flow, notably natural gas, comprising a refrigeration device (1) according to any one of claims 8 to 10, the installation comprising at least one user fluid reservoir (16), a circulation line (25) for said user fluid flow in the cooling exchanger (8).
